# EUROPEAN PATENT APPLICATION

(11) **EP 3 654 555 A1**
(43) Date of publication of application: **20.05.2020**
(21) Application number: 18206515.1
(22) Date of filing: 15.11.2018
(51) Int. Cl.: H04J 14/02, H04Q 11/00

(54) **VERSATILE RE-ARRANGING PROTECTION SWITCH**

(71) Applicant: Nokia Solutions and Networks Oy, 02610 Espoo (FI)
(72) Inventor: PAUWELS, Bart, Joseph, 3980 Tessenderlo (BE)
(74) Representative: MERH-IP Matias Erny Reichl Hoffmann Patentanwälte PartG mbB

(57) **Abstract**

Communication devices and methods are described for a versatile protection re-arrangement in telecom equipment. The communication device may comprise a number N of interfaces for exchanging communication signals and at least a number N+1 of processing modules including N protected processing modules and at least one spare processing module. The communication device may further comprise a protection arrangement for assigning the N interfaces to N of the processing modules. In particular, in a normal operating mode, the protection arrangement may be configured to assign each one of the N interfaces to a respective one of the N protected processing modules and in case of a failure of one of the protected processing modules, the protection arrangement may enter a protection mode and may be configured to reassign at least one interface that in the normal operating mode may not be assigned to the failed failing processing module and reassign the interface assigned in the normal operating mode to the failing processing module. By doing so, the reliability of the telecom equipment is improved.

## Description

### Technical Field

The present document relates to a schema for a versatile re-arrangement of a protection switch in telecom equipment, a communication device and a method for protecting operation of protected processing modules.

### Background

There is an increased interest for better reliability of telecom equipment nodes. These products (telecom equipment nodes) are most vulnerable to outage due to failure of individual or aggregated communication port logic (which may also be referred to as external interface logic), e.g., Media Access Controller (MAC) logic, logic for handling transmission protocol processing for various point-point and point-multipoint transmission media (e.g., electrical, optical, radio, etc.), SERialisation/DESerialisation (SERDES) logic, Line Digital Signal Processor (DSP) logic, Analog Front End logic, Line Driver (LD) logic, broad, coarse or dense wavelength spectrum optical transmission (e.g., LED, Laser, etc.) and receiver module, radio channel transmission and receiver equipment.

Such telecom equipment node is typically most vulnerable to failures in this type of external interface logic (communication port logic), because:
- The equipment exhibits a large number of communication ports, which increases the relative probability that faults occur in this part of the equipment.
- The external interface logic is most exposed to external influences and failures inducing events like excessive electrical tension or currents.
- In particular, an external port transmitter logic is designed to apply a maximum power for a maximum communication distance reaching over the applied medium, while a minimum use of physical space in the equipment is allowed. This typically increases the electrical and thermal stress on such component (external port transmitter logic).
- For some types of transmission media (e.g., optical), the intrinsic reliability of the external interface logic (e.g., a media transceiver) may be considerably lower than the average reliability of the internal logic of the communication equipment node.

This implies that improving the reliability of telecom equipment (i.e., reducing the service outage per time interval) starts at improving the reliability that can be attributed to a relatively large number of external port logic sub-systems in such equipment.

Telecom equipment generally consists of a large part of physical arrays of identical or similar logic or sub-systems that constitute the external ports or interfaces of the equipment. These arrays can be implemented in same components, on same boards, or in multi-board shelves, or multi-shelf racks. The logic or sub-system that constitutes a single external port may be individually replaceable, or as a fixed group of external ports, e.g. for repair after failure in one of them.

Intrinsic improvement of the reliability of processing logic in telecom equipment, as discussed above, can only happen by applying higher quality components; de-rated power conditions (well below the limits they are specified for); and/or a well-controlled environment (temperature, dust, humidity, shock, vibration, etc.). Such measures may increase the cost considerably, as they may result in a more expensive system design, to provide better control of and protection against the operating environment; and/or a more expensive individual external port design due to use of premium components instead of mainstream ones.

An alternative solution is to introduce redundancy (e.g., spare logic) in the larger numbers of vulnerable, identical logic, and means for protection switching. Redundancy with protection switching in the system architecture may allow a drastic reduction of outage due to failure of components or sub-systems, well below what is possible with very high-quality components, even when the intrinsic reliability of the actually applied redundant components or sub-systems is low. This is true provided that the intrinsic reliability of the protection switch, used to automatically replace the failing component or sub-system by a spare one, is high. Sometimes the protection switching capability may not be explicit, but an implicit commodity of other interface logic (like an electrical bus interface). Another condition is that failures in redundant and protected parts of the system are repaired in a time relatively short compared to the Mean Time To Failure (MTTF) of the protected components or sub-systems.

In general, the objective of redundancy and protection switching in a system architecture that applies multiple identical sub-systems, is not necessarily to avoid any impact of a (first) failure in a sub-system.

Tolerance for service outage is typically governed by Service Level Agreements (SLAs) that express which penalties are due by the service provider to the service client(s), at which level and duration of service outage, over a given period of time (typically per year). Limited failure occurrence is accepted as a fact of life, and as an aspect of the business that needs to be controlled.

A particular form of SLA, relevant between telecom equipment vendors and network operators, is the Availability (expressed as percentage of time that the system is fully operational during its contractually agreed lifetime - typically 99.999 %), or the corresponding Unavailability (expressed number of minutes that the system can be not (fully) operational per year, of a network node system). The value of these parameters is derived from the maximum Service Failures In Time (FIT) rate (number of failures in an interval of 10⁹ hours), or Service Mean Time Between Failure (MTBF) parameters, and the duration and extent of service outage experienced during such an event.

Hence, a sub-system protection switching strategy may follow one of the paradigm options below:
1. Uninterrupted service delivery by the whole system, including on external interfaces that depend on the failing sub-system, by virtue of the protection switching.
2. Uninterrupted service delivery by the whole system, except on external interfaces that depend on the failing sub-system. For these, service outage is limited in time by virtue of the protection switching.
3. Service delivery is interrupted for part of, or the whole system, i.e. including on external interfaces that do not depend on the failing sub-system. However, overall service outage is limited in time by virtue of the protection switching.

The latter two options 2 and 3 can be considered as a fast and autonomous provisional repair action by the equipment itself, in anticipation of a full repair action by human personnel, with the objective to limit the (partial or full) service outage time, below the average outage allowed by an SLA; and to make this time predictable, i.e., independent of the planning and execution time needed for an actual repair of the failing sub-system by human personnel.

Typically, the outage time per failure event can be limited to the time needed for protection switch re-configuration and subsequent initialization of the protecting sub-system.

In the past, a wide variety of redundancy schemes and protection switching arrangements have been proposed and applied for protecting components or sub-systems organized in groups or arrays of multiple identical elements, some of which are briefly discussed as follows.

In an active / active N+1 protection schema, N+1 identical sub-systems operate in parallel to deliver service on shared (media) interfaces, in a system that requires a total service capacity equal to what can be delivered by N sub-systems. If one sub-system fails, it is merely shut down, which allows the full system to continue operating at its full required capacity, until a second failure would occur. The probability of the latter happening remains very low if the failing sub-system is repaired or replaced within a time period that is short compared to the Mean Time To Failure (MTTF) of the sub-system type.

The protection switching in this case actually consists in
a) shutting down the compromised sub-system, i.e., making sure that the sub-system cannot interfere with proper operation of the remaining N sub-systems; and
b) performing re-configuration of the full system such that any services delivered by the failing sub-system are taken over by the remaining N sub-systems. In many architecture types, the protection switch function can be implicitly fulfilled by mechanisms other than an explicit switch fabric.

The protection switching in this case also relies on the presence of a shared medium for access by the service clients to the N(+1) sub-systems providing the service. If the access interfaces are not shared, this type of protection cannot be applied.

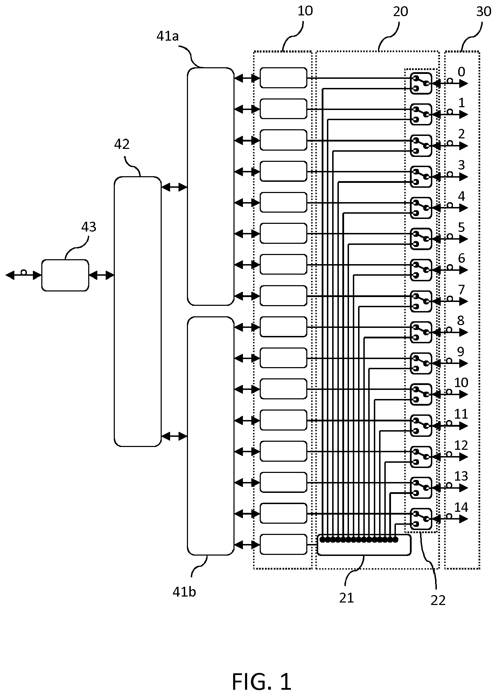

In an active / stand-by N:1 protection schema, a designated sub-system is present, yet kept idle and stand-by, for replacing another sub-system that would fail in a group of N active ones. Such arrangement typically requires rerouting of internal signals and paths from/to the failing sub-system to/from the stand-by redundant sub-system. This is typically achieved by an (N+1):N switch fabric with protection function. The switch fabric may be fully connected, using multiple stages of smaller switching elements, or with an N:1 stage and a 2:1 stage, as illustrated by Figure 1.

The protection system in Figure 1 is implemented on a Line Termination Board (LTB) that has an array of N+1 identical submodules 10, here optical interfaces that are coupled with N (e.g., 15) communication ports or interfaces 30, here optical interfaces. The coupling between the N+1 submodules 10 and the interfaces 30 is via a protection switch 20 comprising an N:1 stage 21 (here a N:1 optical switch) and a 2:1 stage 22 that includes N x 1:2 optical switches. On the other side, the array of submodules is coupled with 2 Media Access Controllers (MAC) 41a, 41b, which in turn are coupled with an Inter Working Function (IWF) 41. Furthermore, a Small Form-factor Pluggable (SFP) 43 is provided on the board. In case a transceiver fails, its associated 1:2 switch 22 changes over to connect the concerned subscriber interface 30 via the N:1 switch 21 with the spare transceiver 10-(N+1).

In electrical systems, an N:1 switching stage may often be implemented by a bus arrangement. However, the higher the frequency of the signals to be diverted for protection, the more complex the bus design needs to be.

In optical systems, bus arrangements are often not an option, due to the loss of optical power that may be linearly proportional to the number of terminations on the bus. Active switching elements also exhibit a non-negligible switching loss (typically 1 - 3 dB) of optical power, which is also not negligible in relation to the typically available power budget (typically 25 - 32 dB) for end-end optical configurations. In both cases, active N:1 switching arrangements often are available only in small (< 25) sizes, and if commercialized, in binary power (2logN) dimensions. Protection switching for larger, or odd sizes of sub-system arrays then requires combinations of multiple stages of protection switching elements, possibly increasing further protection system complexity, intrinsic fault probability and power loss. Protection against multiple failures of the protected sub-system type requires linear multiplication of the 1:N switch part, one for each protecting or spare sub-system, and of the associated signal paths to each protected external interface.

It can be noted that the previously discussed methods or implementations typically either aim at applying protection switching paradigms 1 (uninterrupted service provisioning by the whole system) or 2 (uninterrupted service provisioning by each sub-system not affected by the failure), or do not discuss this aspect of protection switching.

It is further noted that the cost of the choice for paradigms 1 and 2 can be the need for a protection switching arrangement that is unnecessarily complex or specific, and hence unnecessarily expensive, for the level or performance of protection required by the relevant SLAs, in the architecture where it is applied.

### Summary

The present disclosure proposes a protection rearrangement means based on the 3rd option described above for the paradigm for protection switching. That is to say, at an internal failure event for a sub-system in a set of identical parallel sub-systems of a larger system, service delivery may be interrupted for more than one of these sub-systems, during the time needed for protection re-arrangement in order to mitigate the effect of failure of one of these sub-systems. That implies that external interfaces or services that do not depend on the failing sub-system also may be interrupted despite this, for a limited time.

Use of this paradigm allows to limit the complexity of the protection switch fabric used to isolate the failing sub-system at each of its interfaces, and to replace it by a spare (N+1)th sub-system. The protection switch can be reduced to a 2-stage switch fabric with an array of N+1 simple 2:1 switching elements in each stage for protecting against single (1) failure, or even less than that. The invention is based on re-arranging the association between the N+1 different to-be-protected sub-systems in the array, and the N invariant peer internal sub-systems or external interfaces with which they interact inside and/or outside of the system, such that a new arrangement exists whereby a Kth failing sub-system is excluded from any interaction. To achieve this, also a variable number of other identical sub-systems operating in parallel, although not actually affected by the failure, still need to get also a new association with a different, new invariant peer internal sub-system or external interface with which they interact inside and/or outside of the system, a peer sub-system or external interface that is adjacent to the one they were associated to before the failure.

In order to achieve this, the switched terminals of individual protection switches of the two arrays of protection switches are interconnected mutually, and looped at the ends of each array, such that the whole protection switch forms a logical ring, through which the association between an arbitrarily chosen sub-array of processing modules and external interfaces can be shifted by one position in one direction.

The proposed protection schema can be applied to a variety of sub-system array types to be protected. For example, these can include active electrical, optical or radio-wave logic, passive electrical or optical communication path, or a combination of any of these. The basis is a re-arranging protection switch fabric at one or if needed both sides, which re-arranges connectivity between multiple to-be-protected but not all failing sub-systems in the array, and their external counterparts (e.g., interfaces), in order to isolate the failing sub-system(s) in the array.

The proposed protection schema can also be applied for protection against more than 1, or up to M failures in an array of N + M parallel sub-systems of which M are redundant (or spare) for normal operation. This can be achieved by the same 2 stage protection switch structure, yet only require linear extension of the individual switching element dimensions in each stage to (M+1):1. For example, if the proposed protection (re-)arrangement is applied for protection against single failure (i.e., M equals to 1), then one spare sub-system may be needed for normal operation, and 2:1 switching elements may be used. For example, if the proposed protection (re-)arrangement is applied for protection against (up to) two failures (i.e., M equals to 2), then two spare sub-systems may be needed for normal operation, and 3:1 switching elements may be used.

The proposed protection schema may be used for protection of arrays of multiple processing units/modules, transceivers, transmission media, or other resources, that are normally prone to failures and can be replaced individually. The proposed protection schema may also apply to protection of arrays of processing modules for which it normally is not possible or easy to be individually replaced, such as sub-systems soldered on a same board, or links included in a same cable bundle, etc..

As one broad aspect, there is provided a communication device, e.g. a telecom equipment such as a LTB as shown in Figure 1. The communication device may comprise a number N of interfaces for exchange of communication signals with other devices in a network. The communication signals may be electrical, optical or radio frequency signals. The communication device may further comprise at least a number N+1 of processing modules including N protected processing modules and at least one spare processing module. The processing modules and the interfaces may be arranged in respective arrays.

The communication device may further comprise a protection arrangement for assigning the N interfaces to N protected processing modules of the total of at least N+1 processing modules. In general, the protection arrangement may comprise any kind of modules/devices (or combinations of such modules/devices) that are capable of (re-)/assigning or associating the interfaces with the processing modules, for the purpose of protection in case of failures. An assignment of an interface to a processing module (and vice versa) through the protection arrangement means that signals can be exchanged between the interface and the processing module, e.g. via switched signal paths that are established between the interface and the processing module.

In a normal operating mode, the protection arrangement is configured to assign each one of the N interfaces to a respective one of the N protected processing modules, also called the default processing module of an interface. The normal operating mode may refer to the protection arrangement configuration when no failure of the processing modules occurs. Further, in case the number of interfaces is greater than one (N > 1), and a failure occurs in one of the N protected processing modules that is not arranged adjacent to a spare processing module in a first direction of the array of processing modules (i.e. on a first side of the spare processing module), the protection arrangement may enter a protection mode and may be configured to reassign at least one interface, which in the normal operating mode is not assigned to the failed processing module, to an adjacent processing module in a second direction (i.e. on a second side of the spare processing module) opposite the first direction, and reassign the interface assigned in the normal operating mode to the failing processing module to an adjacent processing module, which has been made available by the above operation for association with another interface, in the second direction. The first direction indicates a direction along the series of processing modules in the array, e.g. from top to bottom if the processing modules are considered to be arranged vertically. The second direction is opposite to the first direction, e.g. from bottom to top of the array of vertically arranged processing modules. These directions are meant to indicate how the assignment of interfaces to processing modules is shifted to a next, adjacent processing module in the array. In the above explained configuration, the protection arrangement is configured to selectively and individually shift the assignment of interfaces from default processing modules to adjacent processing modules in the second direction (e.g. towards the top of the array). The second direction is therefore also called shift direction. Of course, the first and second direction may be reversed and directed to the top and the bottom of the array, respectively, or the arrangement of the modules may be horizontally from left to right or vice versa. The assignment between interfaces and processing modules provided by the protection arrangement is such that a logical ring is formed where an end of the array of interfaces can be connected with both ends of the array of processing modules. Thus, the assignment of the interface at the end of the array of interfaces can be shifted in the shift direction so that it changes from the default processing module at the same end of the array of processing modules to the processing module at the other end of the array of processing modules.

In some cases, the interface assigned in the normal operating mode to the failing processing module may be reassigned to a spare processing module. In some cases, the interface assigned in the normal operating mode to the failing processing module may be reassigned to an operating/working processing module that is freed up due to the reassignment of the other interface(s). For the purpose of reassignment, the processing module at one end of the array and the processing module at the other end of the array are considered adjacent, thereby forming a logical ring. This means that a processing module at the top of the array is considered to be adjacent to a processing module at the bottom of the array and vice versa.

Further, the at least N+1 of processing modules may be identical processing modules, or may be capable of performing a same processing function on a respective communication signal. Upon reassignment, the processing modules may be initialized or reconfigured to process the signals received from or transmitted to the respective newly reassigned interface. As such, the processing modules must not be identical or perform the same processing function at a time instant, but they must be able to take over, after reassignment, the processing function of a different processing module, the place of which they assume after the reassignment. Thus, after the reassignment by the protection arrangement, each interface has again an associated processing module that performs the processing function required for this interface.

In some examples, the protection arrangement may be further configured to, in the normal operating mode, assign a designated interface to a corresponding designated processing module that is arranged adjacent to a spare processing module in the first direction. The designated processing module is the processing module that in the above description is excluded from triggering the claimed reassignment procedure, because its associated interface can be simply reassigned in the shift direction to the spare processing module without affecting other interfaces. However, when a processing module different from said designated processing module fails, no simple reassignment, using a single reassignment (e.g. via a single protection switch element), is possible and a series of interfaces must be reassigned as explained above. In this case, the protection arrangement may be configured to, in the protection mode, reassign said designated interface to the spare processing module and reassign another interface to said designated processing module. In normal processing mode, said another interface was assigned to the processing module adjacent to the designated processing module in the first direction. If this processing module (adjacent to the designated processing module in the first direction) is the failing processing module, the series of reassignments comprises two reassignments: (i) reassignment of the designated interface to the spare processing module, and (ii) reassignment of the (another) interface (that was assigned to the failing processing module) to the designated processing module.

If the failing processing module is not the processing module two positions in the first direction from the spare processing module, further reassignments become necessary. In this case, said another reassigned interface is also called 1^{st} affected interface because it is one of the interfaces that must be reassigned due to the failure.

In other words, in the above series of reassignments, the assignments of interfaces to processing modules shift from the default processing module to the respective adjacent processing module in the second (shift) direction, starting with the designated interface reassigned to the spare processing module, said another (1^{st} affected) interface reassigned to the designated processing module that was freed up by the previous reassignment, and the interface that was assigned to the failing processing module reassigned to the processing module that was assigned to said another (1^{st} affected) interface.

This chain of reassignments first uses the spare processing module, thereby freeing the designated processing module that can then be used for reassignment of said another (1^{st} affected) interface. This reassignment chain continues until the interface that was assigned to the failing processing module is reassigned to a processing module that works.

This chain of reassignments may also start from the interface that was assigned in normal operation mode to the processing module which fails, and continue with reassignments in the second direction until another interface is connected to the spare processing module.

In some examples, the number N of interfaces may be greater than two (e.g. at least 3 interfaces). In these cases, the failing processing module may not be arranged, in the first direction, adjacent to the designated processing module (the distance between the spare processing module and the failing processing module in the array may be larger than 2). Then, further reassignment steps may be necessary. For example, the failing processing module may be the processing module 3 positions in the first direction from the spare processing module (i.e. there are 2 processing module in-between spare and failing processing module). Then, the interface assigned in the normal operating mode to the failing processing module is reassigned in the protection mode to the processing module that is assigned in the normal mode to said another (1^{st} affected) interface. This processing module is the processing module that is adjacent to the designated processing module in the first direction, which in turn (as mentioned above) is arranged adjacent to a spare processing module in the first direction. That is to say, a plurality of (more than one; 3 in this example including the interface assigned to the failing processing mode) interfaces that are assigned in the normal operating mode to the protected processing modules are reassigned in the protection mode. In general, at least one and up to N -1 interfaces that are not directly affected by the failing processing module (or in other words, that are not assigned in the normal operating mode to the failing processing module) may need to be reassigned in the protection mode (e.g. the 1^{st} affected interface). In this example, the above-mentioned reassignment chain, where assignments of interfaces to processing modules shift in the second direction from the default processing modules to adjacent processing modules, has a further step of reassigning said another (1^{st} affected) interface to the designated processing module before the interface that was assigned to the failing processing module is reassigned to the processing module that was freed of the assignment to said another (1^{st} affected) interface.

In some examples, the number N of interfaces may be greater than three (e.g. at least 4 interfaces). In these cases, the failing processing module may be arranged even further, in the first direction, from the spare processing module (i.e. the distance between the spare processing module and the failing processing module in the array may be larger than 3). For example, the failing processing module may be the processing module 4 positions in the first direction from the spare processing module (i.e. there are 3 processing module in-between spare and failing processing module). Then, the interface assigned in the normal operating mode to the failing processing module is reassigned in the protection mode to a further processing module, and the interface (2^{nd} affected interface) that is assigned in normal mode to said further processing module is reassigned to the processing module that is assigned in the normal mode to said another (1^{st} affected) interface. That is to say, a plurality of (more than one; 4 in this example including the interface assigned to the failing processing mode) interfaces that are assigned in the normal operating mode to the protected processing modules may be reassigned in the protection mode. Again, at least one and up to N -1 interfaces that are not directly affected by the failing processing module (or in other words, that are not assigned in the normal operating mode to the failing processing module; e.g. 1^{st} and 2^{nd} affected interfaces) may need to be reassigned in the protection mode. In this example, the above-mentioned reassignment chain has again a further step of reassigning said 2^{nd} affected interface before the interface that was assigned to said failing processing module is reassigned to the processing module that was freed of assignment to said 2^{nd} affected interface.

In other words, the protection arrangement is configured to re-assign the interface connected to the failing protected processing module, to another reachable protected processing module, and to re-assign the interface connected to said another protected processing module again to another reachable protected processing module, and to continue this process until an interface connects to the spare protecting processing module. This happens all in a variable number of 1 to maximum N-1 re-assignment steps, the variable number depending on the positions of the spare and the failing processing modules relative to each other.

The re-arranging may start at the interface connected to the failing processing module. The interface is re-connected to the processing module of an adjacent interface. That re-connection process continues through the array until an interface connects to the spare processing module. At that point, the re-connection wave stops, and the remaining interfaces do not suffer a re-connection to another processing module. This general paradigm applies for all systems with N > 1 external interfaces and N + 1 > 2' processing modules.

In some examples, the communication device may comprise a second spare processing module (other than the spare processing module mentioned above). A first failure of one of the protected processing modules will trigger the protection arrangement to be configured in a first protection mode to reassign an interface to the first spare processing module and to reassign the interface that is assigned in the normal mode to the first failed processing module to another protected processing module. Then, in case of a second failure of one of the protected processing modules before the first failure has been repaired (i.e while the first failing processing module is still inoperable), the protection arrangement may be configured in a second protection mode to reassign an interface to the second spare processing module and to reassign the interface that is assigned in the normal mode to the second failed processing module to another protected processing module.

Thus, in case of a second failure of a protected processing module, after a first re-configuration that mitigated the effects of the failure of the first protected processing module, the protection arrangement is configured, in the second protection mode, to reassign an interface, assigned in the first protection mode to the second failing processing module, to the processing module of an adjacent interface, and repeat the reassignment of interfaces until a further interface is assigned to the second spare processing module. As a result, all interfaces are assigned again to working processing modules.

In order to achieve this, the switched terminals of individual protection switches of the two arrays of protection switches may be interconnected mutually, and looped at the ends of each array, such that the whole protection switch forms a logical ring, through which the association between an arbitrarily chosen sub-array of processing modules and external interfaces can be shifted by one position in both directions, or two positions in one direction. In some examples, the protection arrangement of the communication device may comprise two arrays of switch devices. In particular, the switch devices of the first array may be respectively connected with the interfaces of the communication device and the switch devices of the second array may be respectively connected with the processing modules of the communication device. It should be noted that the protection arrangement of the communication device may not necessarily always comprise physical switch devices, in some cases.

The switch devices may be configured to selectively connect an interface with its default processing module or with an processing module that is arranged adjacent to the default processing module in the second direction (i.e. on the second side of the default processing module). The switch device at an end of the array in the second direction may be configured to selectively connect its interface with its default processing module at the same end of the array or with a processing module at the other end of the array, to thereby realize a logical ring arrangement.

In some examples, the switch devices may be 1:M switches each of which has one common terminal and M switched terminals. In particular, the common terminals of the first array of switch devices may be respectively connected with the interfaces and the common terminals of the second array of switch devices are respectively connected with the processing modules. For purposes of the present description, unless the context clearly indicates otherwise, the terms 1:M and M:1 may be used interchangeably to refer to a switch device having one common terminal and M switched terminals. For instance, a switch device with one common terminal and two switched terminals can be referred to as a 1:2 switch device or a 2:1 switch device.

In some examples, a first switched terminal of a switch device of the first array may be connected with a switched terminal of a switch device of the second array and a second switched terminal of the switch device of the first array may be connected with a switched terminal of another switch device of the second array.

In some examples, the number M of the switched terminals of the switch devices corresponds to (equals to) the number of failures which the protection arrangement protects against plus one. For instance, M may equal to 2 for protection against a single failure while M may equal to 3 for protection against up to two failures (double failure).

In some examples, the number M of switched terminals may be independent of the number of the interfaces and/or the number of the protected processing modules of the communication device. This may be beneficial in a system with a large number of external interfaces and/or (internal) processing sub-systems.

In some examples, the above protection arrangement may be regarded as a primary protection arrangement and the above interfaces may be regarded as primary interfaces, as the communication device may further comprise a number N of secondary interfaces and a secondary protection arrangement for assigning the N secondary interfaces to N out of N+M processing modules. In particular, the assignment by the secondary switch arrangement may mirror the assignment by the primary protection arrangement.

In some examples, the processing modules of the communication device may be active or passive electrical, radio or optical modules. Additionally or alternatively, the interfaces of the communication device may be electrical, radio or optical interfaces.

As another broad aspect, there is provided a method for protecting operation of N protected processing modules that are respectively assigned to N communication interfaces. The processing modules may be arranged in an array of processing modules where the ends of the array are considered virtually connected to form a logical ring of adjacent processing modules. Thus, for the purpose of reassignment, the processing module at one end of the array and the processing module at the other end of the array may be considered adjacent. Further, there may be provided one or more spare processing modules.

The method may comprise operating in a normal operating mode where the N interfaces are assigned to the N protected processing modules so that signals can be exchanged between the interfaces and the processing modules, and the processing modules can respectively perform processing functions in relation to the exchanged signals.

Upon a failure of one of the protected processing modules that is not arranged adjacent to a spare processing module in a first direction of the array of processing modules, a protection mode may be entered where the method may comprise:
reassigning the interface that during normal operation was assigned to the failing processing module to a first protected processing module that is adjacent to the failing processing module in a second direction opposite the first direction;
reassigning the interface that during normal operation was assigned to the first protected processing module to a second protected processing module that is adjacent to the first protected processing module in the second direction; and
repeating the above reassignment of interfaces that were not assigned to the failing processing module until an interface is reassigned to a spare processing module.

All in a variable number of 1 to maximum N-1 reassignment steps are performed in the protection mode. The variable number depends on the positions of the spare and the failing processing modules relative to each other in the array of processing modules.

In case of a second failure of a protected processing module before the first failure has been repaired (i.e. as long as the first failed processing module is out of service), the method may comprise reassigning an interface, reassigned before to the second failing processing module, to the processing module that is adjacent in the second direction to the processing module that was assigned before to the interface. That means that the assignment of the interface is shifted in the second (shift) direction to an adjacent processing module in the array of processing modules. The reassignment of interfaces is repeated until a further interface is assigned to a second spare processing module, thereby the effects of the second failing processing module are mitigated.

According to another aspect, the above method for protecting operation of N protected processing modules that are respectively assigned to N communication interfaces may be disclosed differently. The method may comprise, upon a failure of one of the protected processing modules, reassigning at least one interface that during normal operation is not assigned to the failed processing module to at least one spare processing module.

In some examples, the method may further comprise reassigning the interface that during normal operation is assigned to the failed processing module to the processing module that during normal processing is assigned to an interface that is reassigned to a spare processing module.

In some examples, the method may further comprise reassigning the interface that during normal operation is assigned to the failed failing processing module to another protected processing module and reassigning the interface that during normal operation is assigned to said another protected processing module to the processing module that during normal processing is assigned to an interface that is reassigned to a spare processing module.

Implementations of the disclosed apparatus may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed devices can be implemented as a method, as the skilled person will appreciate.

Other and further embodiments of the present invention will become apparent during the course of the following discussion and by reference to the accompanying drawings.

### Brief Description of the Figures

Embodiments of the disclosure are explained below in an exemplary manner with reference to the accompanying drawings, wherein
Figure 1 shows an exemplary system employing an active/stand-by N:1 protection schema.
Figure 2 shows an exemplary system in a normal configuration according to an embodiment of the present invention.
Figure 3 shows an exemplary system in a single failure configuration according to an embodiment of the present invention.
Figure 4 shows a generalized view of a system for protection against single failure in a normal configuration according to an embodiment of the present invention.
Figure 5 shows a generalized view of a system for protection against single failure in a single failure configuration according to an embodiment of the present invention.
Figure 6 shows a generalized view of a system for protection against double failures in a normal configuration according to an embodiment of the present invention.
Figure 7 shows a generalized view of a system for protection against double failure in a single failure configuration according to an embodiment of the present invention.
Figure 8 shows a generalized view of a system for protection against double failure in a double failure configuration according to an embodiment of the present invention.
Figure 9 shows an exemplary flow diagram for a method of protection arrangement according to an embodiment of the present invention.

### Detailed Description

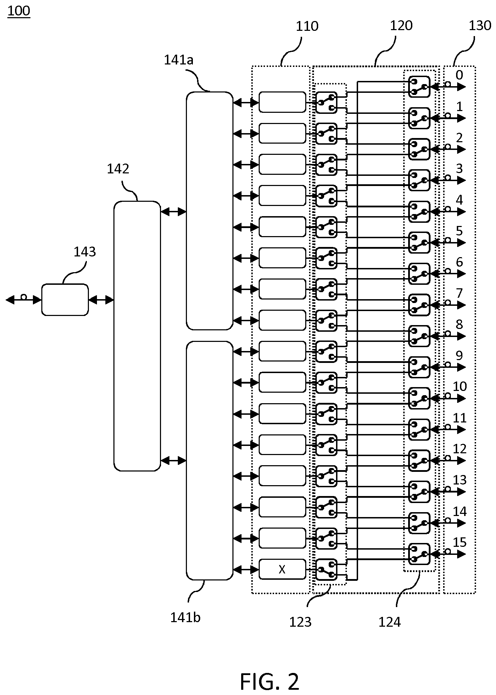

Figure 2 shows as an example of a network node system or sub-system employing the principle of the present disclosure, with one or more network side interfaces, and an array of subtending/subscriber interface functions, that can include Media Access Controller (MAC) logic for point-point or point-multipoint transmission media (e.g., electrical, optical, radio, etc.), SERialisation/DESerialisation (SERDES) logic, Line Digital Signal Processor (DSP) logic, Analog Front End logic, Line Driver (LD) logic, broad, coarse or dense wavelength spectrum optical transmission (e.g., LED, Laser, etc.) and receiver module, radio channel transmission and receiver equipment.

The proposed schema can be embodied as a single stand-alone Access Multiplexer equipment, or as a Line Termination (LT) board that comprises a network side interface with an aggregation Network Termination (NT) board, and connectors for a set of physical subtending/subscriber links, for any type of communication Network Element. It must be noted that the principle of the present invention is not limited to the shown embodiment but can be applied to any arrangement of parallel identical sub-systems that need to be supplied with protection against failures of individual sub-systems.

The shown board 100 comprises an array of subscriber side media dependent transceivers serving as sub-systems or as processing modules. For instance, the transceivers may be optical transceivers in the case shown. The board 100 serves up to N=15 subscriber ports/interfaces 130-0 to 130-14, yet contains N+1=16 optical transceivers 110-0 to 110-15. Any of these 16 optical transceivers can be configured to be the redundant/spare transceiver during normal operation, as shown in the depicted configuration, where this role is taken by the transceiver 110-15 at the bottom and marked with an X. The protection arrangement 120 that makes this possible consists of 2 stages of 2:1 switches 123 and 124, specific for the type of signal used at that side of the transceiver. Thus, such kind of protection arrangement employing switches may also be referred to as protection switch arrangement. For instance, an optical signal may be transmitted/received in case of optical transceivers used.

The figure also shows a 16th 2:1 switch 124-15 serving a 16th subscriber port 130-15. This illustrates that with a small extra investment the same board can be made versatile, to serve 16 ports without transceiver protection or to serve 15 ports with single transceiver protection, depending on different circumstances or requirements. For the proposed protection schema, switch 124-15 and the 16th subscriber port 130-15 is not required and may be omitted. Actually, when employing protection against a single failure, N+1 optical transceivers including one spare transceiver can serve N subscriber ports. In this case, also the switch 123-15 may not be necessary and the spare transceiver 110-15 can be directly connected with the switch 124-0. Nevertheless, it may be useful to maintain symmetry and provide all N+1 switches and subscriber ports even for the case that only protected operation is envisaged as shown in Figure 2. This allows that the spare transceiver is freely selected. Its associated subscriber port and switch 124 are then disabled, and the associated switch 123 is set in a fixed manner to the next subscriber port that is below the disabled subscriber port. Since in Figure 2 all transceivers 110 are operating without failure, it may also be referred to as a normal configuration or a normal operation mode where each subscriber port 130 is assigned to/connected with its default transceiver 110.

The protection arrangement 120 in the depicted embodiment comprises two arrays of switch devices. The switch devices 124 of the first array are connected with the respective subscriber ports 130, and the switch devices 123 of the second array are connected with the respective transceivers 110. The switch devices are configured to selectively connect a subscriber port with its respective default transceiver, or to connect the subscriber port with a transceiver that is arranged adjacent to the default transceiver in the shift direction of the protection arrangement. In the shown embodiment, the shift direction is to the top of the array of transceivers, but in other embodiments this may be different. The switch device 124-0 at the top of the array is configured to selectively connect its subscriber port 130-0 with its respective default transceiver 110-0 or with the spare transceiver 110-15 at the bottom of the array. The switch devices are 1:2 switches each of which having one common terminal and 2 switched terminals. The common terminals of the first array 124 of switch devices are respectively connected with the subscriber ports 130, and the common terminals of the second array 123 of switch devices are respectively connected with the transceivers 110. A first switched terminal of the switch device 124-i of the first array is connected with a respective switched terminal of the switch device 123-i of the second array to provide for the connection of subscriber port 130-i to default transceiver 110-i. A second switched terminal of the switch device 124-i of the first array is connected with a respective switched terminal of another adjacent switch device 123-j of the second array to provide for a shifted connection of subscriber port 130-i to adjacent transceiver 110-j. Depending on the shift direction of the protection arrangement 120, the other adjacent switch device 123-j is arranged above (j=i-1) or below (j=i+1) the corresponding switch device 123-i. In the embodiment of Figure 2, the shift direction is towards the top of the array of transceivers. This allows that the switch devices selectively connect a subscriber port with its default transceiver or with an adjacent transceiver that is arranged adjacent to the default transceiver in the shift direction.

In some examples, if a failing transceiver can be guaranteed to not generate any interfering signal, then in downstream direction the left column of 2:1 switches 123 can be replaced by passive elements that combine 2 input signals into an output signal. The same applies also to the right column of switches 124 in upstream direction. That is to say, in upstream direction the right column of 2:1 switches 124 may be replaced by passive elements that combine 2 input signals into an output signal, if a failing transceiver can be guaranteed to not generate any interfering signal.

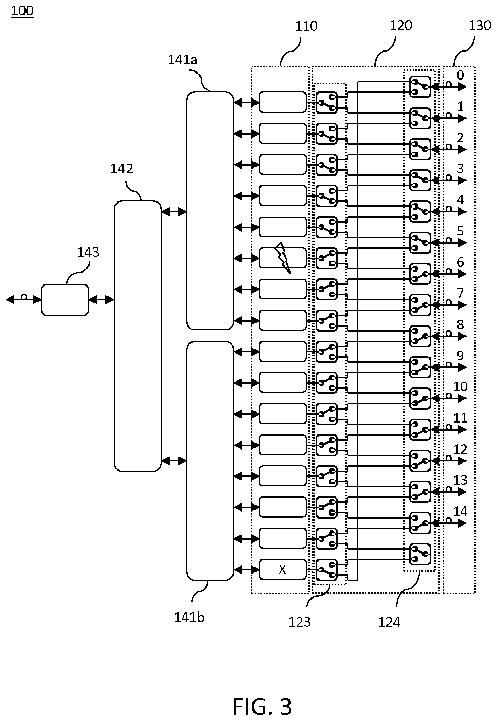

The configuration illustrated in Figure 3 shows an exemplary case where re-configuration is necessary in the protection switch arrangement 120 in case the media transceiver 110-5 serving subscriber port or line 130-5 fails. In order to indicate that subscriber port 130-15 assigned to spare transceiver 110-15 is disabled, the double arrows in Figure 3 have been removed. Although switch 124-15 is also disabled, it is still shown in Figure 3. In correspondence with the normal operating mode or the normal configuration (shown in Figure 2), the case where re-configuration is necessary because of a transceiver failure may be referred to as a protection mode. In order to isolate the failing transceiver 110-5 and to provide service once more on all lines 130-0-130-14, the protection switches which serve subscriber optical ports 130-0 to 130-5 during normal operating mode/configuration (as shown in Figure 2) may need to be reconfigured (reassigned) to use the respective adjacent transceivers instead of the original ones. In the present example shown in Figure 3, the protection switches for all ports between the failing transceiver 110-5 and the spare transceiver 110-15 (i.e., ports 130-0, 130-1, 130-2, 130-3 and 130-4) may need to be reconfigured to use the respective adjacent transceiver in the shift direction of the protection arrangement 120 (here towards the top of the array of processing modules 110) instead of the original ones. In particular, port 130-0 may be reassigned to use spare transceiver 110-15 instead of original transceiver 110-0, port 130-1 may be reassigned to use transceiver 110-0 (which was freed of his assignment with port 130-0 in the previous reassignment step) instead of original transceiver 110-1, port 130-2 may be reassigned to use transceiver 110-1 (which was freed of his assignment with port 130-1 in the previous reassignment step) instead of original transceiver 110-2, port 130-3 may be reassigned to use transceiver 110-2 (which was freed of his assignment with port 130-2 in the previous reassignment step) instead of original transceiver 110-3, port 130-4 may be reassigned to use transceiver 110-3 (which was freed of his assignment with port 130-3 in the previous reassignment step) instead of original transceiver 110-4, and port 130-5 may be reassigned to use transceiver 110-4 (which was freed of his assignment with port 130-4 in the previous reassignment step) instead of original transceiver 110-5. This kind of protection action "wave" (chain of reassignment) may stop at the redundant transceiver, which may not serve any port while in normal operation.

The suggested switch arrangement may be cyclic and may wrap around from the spare transceiver 110-15 at the bottom of the arrangement and its first line. Thus, the configuration of the switch 124-0 is changed to connect the subscriber port 130-0 via the switch 123-15 to the spare transceiver 110-15. The subscriber port 130-1 is reconfigured/reassigned to be connected by the switches 124-1 and 123-0 to the transceiver 110-0. Similarly, the subscriber port 130-2 is reconfigured to be connected by the switches 124-2 and 123-1 to the transceiver 110-1, etc., until the subscriber port 130-5 that may be initially served by the failing transceiver 130-5 is reconfigured to be connected by the switches 124-5 and 123-4 to the transceiver 110-4 that may initially serve line 130-4. The reconfiguration/reassignment of the protection switching arrangement 120 may include not only the switches directly assigned to the failing sub-system/processing module (e.g., the failing transceiver 110-5 in the present example) but may further include the switches for the other sub-systems (e.g., the other transceivers 110-0 to 110-4) that may be assigned to the other ports during the normal operation mode. Subscriber ports 130-6 to 130-14, transceivers 110-6 to 110-14 and their corresponding protection switches in 123, 124 on the "other side" of the failing transceiver 110-5 in the present example as shown in Figure 3 may be not affected by the failing transceiver 110-5 and the reconfiguration of the protection switch arrangement 120.

In other words, the re-configuration of the protection arrangement 120 comprises reassigning the subscriber port 130-5 that during normal operation was assigned to the failing transceiver 110-5 to transceiver 110-4 that is adjacent to the failing transceiver in the shift direction of the protection arrangement. Then the subscriber port 130-4 that during normal operation was assigned to transceiver 110-4 is reassigned to transceiver 110-3 that is adjacent to transceiver 110-4 in the shift direction. The above reassignment of subscriber ports 130 that were not assigned to the failing transceiver 110-5 is repeated until subscriber port 130-0 is reassigned to the spare transceiver 110-15. Thus, a variable number of reassignment steps are performed where the variable number depends on the positions of the spare transceiver and the failing transceiver relative to each other in the array of transceivers. In the illustrated example, six subscriber ports 130-0 to 130-5 are reassigned.

This action of reassignment may interrupt service of sub-systems and external interfaces for the duration of the protection switching reassignment action, and the possible sub-sequent re-initialization of the transceivers for serving their new (reassigned) ports, for all of the sub-set of ports affected by the protection re-arrangement, even if only one of these ports may be affected by the original transceiver failure. Nevertheless, the aggregate outage of subscriber ports during the protection switch-over time will be less than the outage caused by a single failure in a not protected transceiver array that needs to wait for repair by human intervention. Such human intervention is typically known as time consuming.

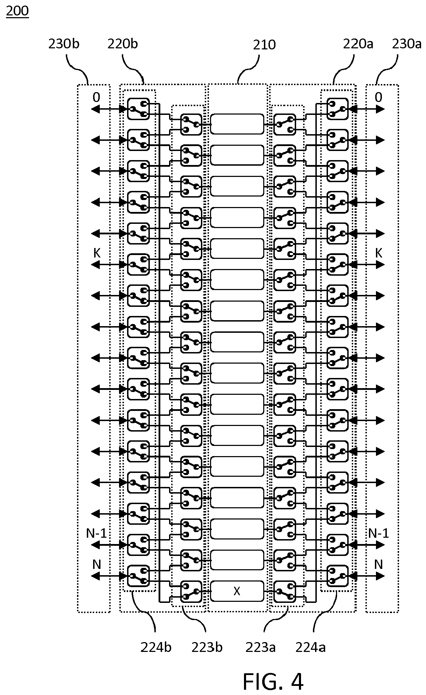

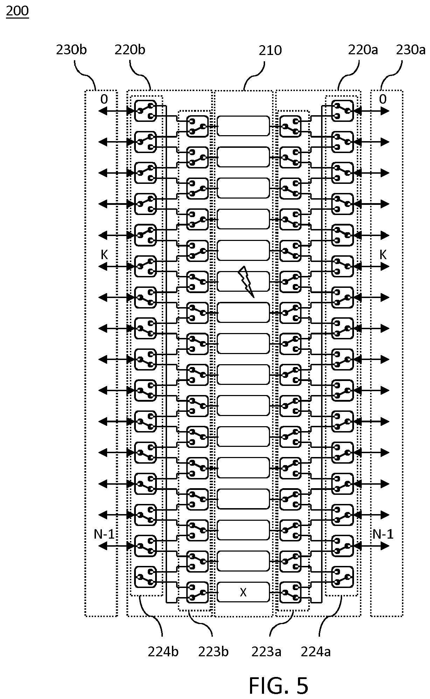

Figures 4 and 5 show a generalized view 200 of the protection switch arrangement 220, for protection against failure of 1 sub-system 210-0 to 210-(N-1) in the array of sub-systems 210 with redundancy of one spare sub-system 210-N (marked with X). Each sub-system 210-0 to 210-N in the array of sub-systems 210 may be identical or may be capable of performing the same function or process. The protection switch arrangement 220 is two-sided with one arrangement 220a on the right side and another arrangement 220b on the left side, for a configuration where each sub-system has a left-side interface 230b and right-side interface 230a. As before, the protection switch arrangements 220a, 220b each comprises two switch arrays 223a, 224a and 223b, 224b, respectively. In particular, Figure 4 illustrates the normal configuration with a spare sub-system 210-N at the bottom. As before, interfaces 230a-N and 230b-N can be used if the system does not operate in the protected mode but are shown in the figure for completeness. Further, it is to be noted that in some cases, the protection arrangements 220a, 220b may not be necessary to always comprise switches. For instance, if the interfaces 230a are not bi-directional (e.g., only operate in a single direction from right to left), then the switches 223a of protection arrangement 220a may be replaced by simple passive elements that combine two input signals into one output signal. In some examples, such passive elements may be optic couplers in case optical signals are transmitted/received. Similar replacement may be applied also to the other protection arrangement 220b and/or the other direction (e.g., from left to right).

Figure 5 illustrates the single-failure configuration when sub-system 210-K is malfunctioning/failing. Interfaces 230a-K and 230b-K are reconfigured/reassigned via their respective protection switches 223a-(K-1), 224a-K on the right side and 223b-(K-1), 224b-K on the left side to be connected to sub-system 210-(K-1). In particular, interfaces 230a-0 and 230b-0 are reconfigured via respective protection switches 223a-N, 224a-0 on the right side and 223b-N, 224b-0 on the left side to be connected to spare sub-system 210-N. As before, switches 223a-N and 223b-N may be not required if interfaces 230a-N and 230b-N are not provided. Similar as before, the interfaces for the transceivers between the failing transceiver 210-K and the first transceiver 210-0 are reconfigured to be connected with the respective preceding transceivers in the array 210.

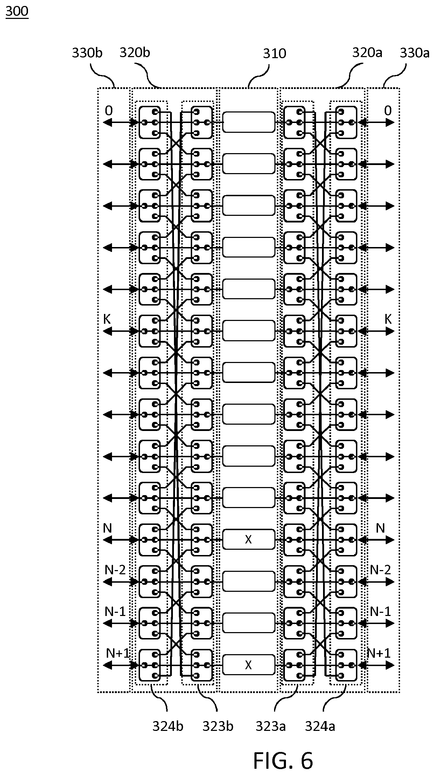

Figures 6, 7 and 8 show a generalized view 300 of an extended protection switch arrangement, for protection against double (2) failures in the sub-system array 310 with redundancy of two spare sub-systems. The use of 1:3 switches and N+2 sub-systems in each array allows for protection of N ports against up to 2 simultaneous or consecutive sub-system (e.g., transceiver) failures, at arbitrary positions in the array of sub-systems.

Similar to that shown in Figure 4, Figure 6 illustrates the normal configuration with a first spare sub-system 310-N and a second spare sub-system 310-(N+1), both marked with X. Similar as before, either one or both of the pair of interfaces 330a-N and 330b-N and the pair of interfaces 330a-(N+1) and 330b-(N+1) can be used if the system does not operate in protected mode.

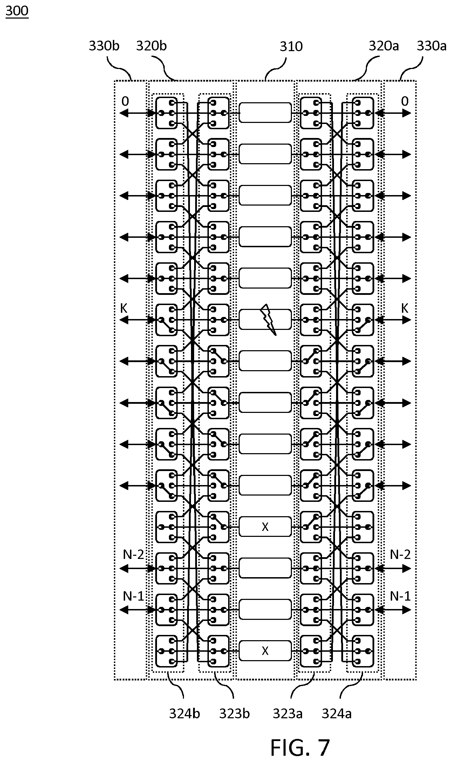

Figure 7 illustrates the single-failure configuration when the sub-system 310-K is malfunctioning/failing. Interfaces 130a-K and 130b-K are reconfigured via respective protection switches 323a-(K+1), 324a-K on the right side and 323b-(K+1), 324b-K on the left side to be connected to sub-system 310-(K+1). Interfaces 330a-(N-3) and 330b-(N-3) are reconfigured via respective protection switches 323a-N, 324a-(N-3) on the right side and 323b-N, 324b-(N-3) on the left side to be connected to spare sub-system 310-N. As before, switches 323a-N and 323b-N may be not required if interfaces 330a-N and 330b-N are not provided. Further, in the present example shown in Figure 7, the interfaces for the transceivers between the failing transceiver 310-K and the spare transceiver 310-N (i.e., transceivers 310-(K+1), 310-(K+2), ..., 310-(N-3) and 310-N) are reconfigured to be connected with the respective subsequent transceivers in the array.

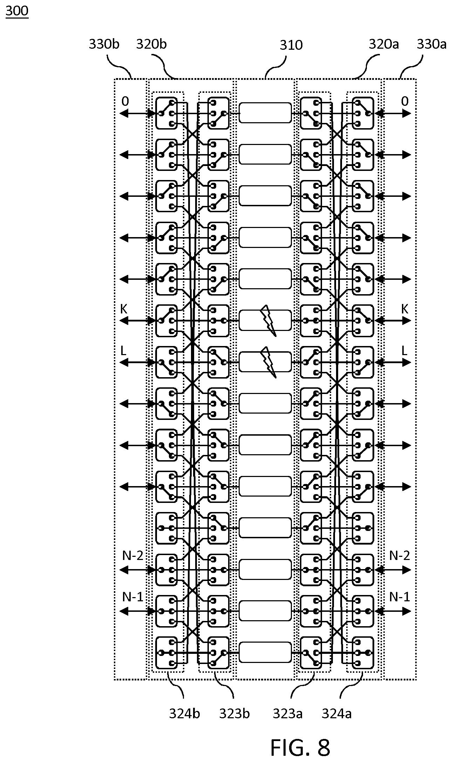

Figure 8 illustrates the double-failure configuration when both sub-systems 310-K and 310-L are malfunctioning/failing. In some examples, the failures of the two sub-systems 310-K and 310-L can occur at the same time (simultaneously). In some examples, the failures of the two sub-systems 310-K and 310-L can occur consecutively within the minimum intervention time for first repair (i.e. before the first failure has been repaired).

As shown in Figure 8, interfaces 330a-K and 330b-K are reconfigured via respective protection switches 323a-(K-1), 324a-K on the right side and 323b-(K-1), 324b-K on the left side to be connected to sub-system 310-(K-1). Interfaces 330a-0 and 330b-0 are reconfigured via respective protection switches 323a-(N+1), 324a-0 on the right side and 323b-(N+1), 324b-0 on the left side to be connected to spare sub-system 310-(N+1). As before, switches 323a-(N+1) and 323b-(N+1) may be not required if interfaces 330a-(N+1) and 330b-(N+1) are not provided. Further, in the present example shown in Figure 8, the interfaces for the transceivers between the failing transceiver 310-K and the transceiver 310-(N+1) (i.e., transceivers 310-(K-1), 310-(K-2), ..., 310-0 and 310-(N+1)) are reconfigured to be connected with the respective preceding transceivers in the array.

Furthermore, interfaces 330a-L and 330b-L are reconfigured via respective protection switches 323a-(L+1), 324a-L on the right side and 323b-(L+1), 324b-L on the left side to be connected to sub-system 310-(L+1). Interfaces 330a-(N-3) and 330b-(N-3) are reconfigured via respective protection switches 323a-N, 324a-(N-3) on the right side and 323b-N, 324b-(N-3) on the left side to be connected to spare sub-system 310-N. As before, switches 323a-N and 323b-N may be not required if interfaces 330a-N and 330b-N are not provided. Further, in the present example shown in Figure 8, the interfaces for the transceivers between the failing transceiver 310-L and the transceiver 310-N (i.e., transceivers 310-(L+1), 310-(L+2), ..., 310-(N-3) and 310-N) are reconfigured to be connected with the respective subsequent transceivers in the array.

As discussed above, the proposed protection schema is applicable for protecting a plurality of interfaces (N>1). In the case of N > 1, there are 2 sub-cases:
a. The failing processing module is adjacent to the spare processing module, in the right (first) direction, and other processing modules do not have to be reassigned. Only the interface that was associated with the failing processing module needs to be reassigned to the spare process module.
b. The failing processing module is not adjacent to the spare processing module in the right direction. The interface that was associated with the failing processing module needs to be reassigned to another protected processing module, and so are other interfaces, until one is associated with the spare process module.

In order to address case b), the proposed method comprises, in addition to reassigning the interface that is directly affected by a failing processing module (i.e. the interface that is assigned in normal operating mode to the failing processing module), the reassigning of other interfaces that are not directly affected by the failure, to processing modules.

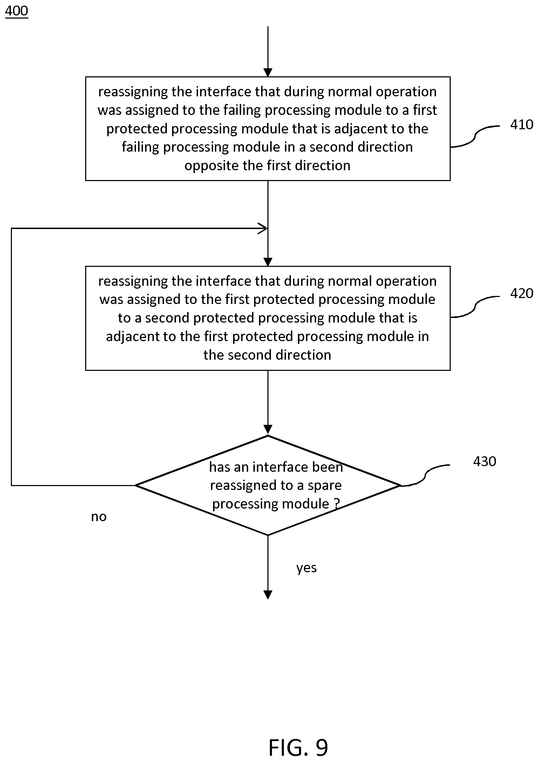

Figure 9 illustrates an exemplary flow diagram for a method 400 protecting operation of N protected processing modules that are respectively assigned to N communication interfaces. The processing modules and the interfaces are arranged in an array. The array of processing modules comprises the N protected processing modules and at least one spare processing module that during normal operation is not assigned to any interface. In general, the method may be applied when a failure of one of the N protected processing modules occurs if the failing processing module is not arranged adjacent to a spare processing module in a first direction of the array of processing modules.

In step 410, the interface that during normal operation was assigned to the failing processing module is reassigned to a first protected processing module that is adjacent to the failing processing module in a second direction opposite the first direction.

In step 420, the interface that during normal operation was assigned to the first protected processing module is reassigned to a second protected processing module that is adjacent to the first protected processing module in the second direction.

In step 430, it is determined whether in step 420 an interface has been reassigned to a spare processing module. If no interface has been reassigned to the spare processing module, the above reassignment of interfaces that were not assigned to the failing processing module is successively repeated with the reassignment of the next interface in the second direction. Thus, a wave of reassignments propagates through the array of interfaces in the second direction until an interface is reassigned to a spare processing module. This wave of reassignments, when reaching an end of the array of interfaces, may wrap around to the other end and reassign the interface at the end of the array with the processing module at the other end of the array of processing modules. Thus, for the purpose of reassignment, the processing module at one end of the array and the processing module at the other end of the array are considered adjacent.

If the wave of reassignments of interfaces reaches a spare processing module, as determined in step 430, it stops. In this case, all interfaces have been reassigned to operating processing modules. The failed processing module is removed of any assignment, and can be shut down and later repaired. In total, a variable number of reassignment steps are performed that depends on the positions of the spare processing module and the failing processing module relative to each other in the array of processing modules.

The above process can be repeated for a second failure if more than one spare processing module is provided. In this case, an interface, reassigned before to the second failing processing module, is reassigned to the processing module that is adjacent in the second direction to the processing module that was assigned before to the interface. The reassignment of interfaces is repeated until a further interface is assigned to a second spare processing module.

In view of the above examples, it should be noted that the same concept of protection switch arrangement can be further adapted (extended) to provide protection against an arbitrarily configurable number of consecutive failures (all within the minimum intervention time for first repair as mentioned above) for an arbitrary number of to-be-protected sub-systems, with only a linear increase in the dimension of the individual switch element and without an increase in the complexity of the 2 stage switch fabric structure.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. Communication device comprising:
a number N of interfaces for exchange of communication signals;
at least a number N+1 of processing modules including N protected processing modules and at least one spare processing module, the processing modules arranged in an array; and
a protection arrangement for assigning the N interfaces to N of the processing modules, wherein
in a normal operating mode, the protection arrangement is configured to assign each one of the N interfaces to a respective one of the N protected processing modules;
in case of a failure of a protected processing module that is arranged not adjacent to a spare processing module and in a first direction of the array of processing modules, the protection arrangement enters a protection mode and is configured to reassign at least one interface, which in the normal operating mode is not assigned to the failing processing module, to an adjacent processing module in a second direction opposite the first direction, and to reassign the interface assigned in the normal operating mode to the failing processing module to an adjacent processing module in the second direction; and
for the purpose of reassignment, the processing module at one end of the array and the processing module at the other end of the array are considered adjacent.

2. Communication device of claim 1, wherein the protection arrangement is configured to:
in the normal operating mode, assign a designated interface to a corresponding designated processing module that is arranged adjacent to a spare processing module in the first direction; and
in the protection mode, reassign the designated interface to the spare processing module and reassign another interface to the designated processing module.

3. Communication device of claim 2, wherein the interface assigned in the normal operating mode to the failing processing module is reassigned in the protection mode to the processing module that is assigned in the normal mode to said another interface.

4. Communication device of claim 2, wherein the interface that is assigned in normal mode to a further processing module is reassigned to the processing module that is assigned in the normal mode to said another interface, and the interface assigned in the normal operating mode to the failing processing module is reassigned in the protection mode to said further processing module.

5. Communication device of any previous claim, comprising a second spare processing module, wherein in case of a second failure of a protected processing module, after a first re-configuration that mitigated the effects of the failure of the first protected processing module, the protection arrangement is re-configured in a second protection mode to reassign an interface, assigned in the first protection mode to the second failing processing module, to the processing module of an adjacent interface, and repeat the reassignment of interfaces until a further interface is assigned to the second spare processing module.

6. Communication device of any previous claim, wherein the protection arrangement comprises 2 arrays of switch devices, and wherein the switch devices of the first array are connected with the respective interfaces and the switch devices of the second array are connected with the respective processing modules, and wherein the switch devices are configured to selectively connect an interface with its default processing module or with an adjacent processing module that is arranged adjacent to the default processing module in the second direction.

7. Communication device of claim 6, wherein the switch devices are 1:M switches each having a common terminal and M switched terminals, the common terminals of the first array of switch devices are connected with the respective interfaces and the common terminals of the second array of switch devices are connected with the respective processing modules, and wherein the switch device at an end of the array in the second direction is configured to selectively connect its interface with its default processing module at the end of the array or with a processing module at the other end of the array.

8. Communication device of claim 7, wherein a first switched terminal of a switch device of the first array is connected with a switched terminal of a switch device of the second array and a second switched terminal of the switch device of the first array is connected with a switched terminal of another switch device of the second array.

9. Communication device of claim 7 or 8, wherein the number M of the switched terminals of the switch devices corresponds to the number of failures which the protection arrangement protects against plus 1, in particular M=2 for protection against a single failure and M=3 for protection against a double failure.

10. Communication device of any one of claims 7 to 9, wherein the number M of the switched terminals is independent of the number of the interfaces and the number of the protected processing modules.

11. Communication device of any previous claim, the protection arrangement being a primary protection arrangement and the interfaces being primary interfaces, the device further comprising:
a number N of secondary interfaces; and
a secondary protection arrangement for assigning the N secondary interfaces to N of the processing modules, wherein the assignment by the secondary switch arrangement mirrors the assignment by the primary protection arrangement.

12. Communication device of any previous claim, wherein the processing modules are active or passive electrical, radio or optical modules, and/or wherein the interfaces are electrical, radio or optical interfaces.

13. Method for protecting operation of N protected processing modules that are respectively assigned to N communication interfaces, the processing modules arranged in an array, the method comprising, upon a failure of one of the protected processing modules that is not arranged adjacent to a spare processing module in a first direction of the array of processing modules:
reassigning the interface that during normal operation was assigned to the failing processing module to a first protected processing module that is adjacent to the failing processing module in a second direction opposite the first direction;
reassigning the interface that during normal operation was assigned to the first protected processing module to a second protected processing module that is adjacent to the first protected processing module in the second direction; and
repeating the above reassignment of interfaces that were not assigned to the failing processing module until an interface is reassigned to a spare processing module,
wherein for the purpose of reassignment, the processing module at one end of the array and the processing module at the other end of the array are considered adjacent.

14. Method of claim 13, wherein a variable number of reassignment steps are performed that depends on the positions of the spare and the failing processing modules relative to each other in the array of processing modules.

15. Method of claim 13 or 14, further comprising, in case of a second failure of a protected processing module:
reassigning an interface, which has been reassigned before to the second failing processing module, to the processing module that is adjacent in the second direction to the processing module that was assigned before to the interface; and
repeating the reassignment of interfaces until a further interface is assigned to a second spare processing module.
